# EUROPÄISCHE PATENTSCHRIFT

(11) **EP 1 402 723 B1**
(45) Veröffentlichungstag und Bekanntmachung des Hinweises auf die Patenterteilung: **11.04.2007**
(21) Anmeldenummer: 02742807.7
(22) Anmeldetag: 17.06.2002
(51) Int. Cl.: H04N 5/445, H04M 1/57, H04M 11/00

(54) **SYSTEM ZUM SCHALTEN, STEUERN, PROGRAMMIEREN UND BEDIENEN VON KOMMUNIKATIONSEINRICHTUNGEN**
SYSTEM FOR SWITCHING, CONTROLLING, PROGRAMMING AND OPERATING COMMUNICATIONS DEVICES
SYSTEME POUR COMMUTER, REGULER, PROGRAMMER ET EXPLOITER DES DISPOSITIFS DE COMMUNICATION

(30) Priorität: 04.07.2001 DE 10132276
(43) Veröffentlichungstag der Anmeldung: 31.03.2004
(73) Patentinhaber: SIEMENS AKTIENGESELLSCHAFT, 80333 München (DE)
(72) Erfinder: NEUHAUS, Ralf, 44534 Lünen (DE)
(86) Internationale Anmeldenummer: PCT/DE2002/002206
(87) Internationale Veröffentlichungsnummer: WO 2003/005709

(56) Entgegenhaltungen:
- EP-A- 0 884 907
- WO-A-02/43350
- US-A- 5 410 326
- US-A- 5 805 677

## Beschreibung

Die Erfindung betrifft ein System zum Schalten, Steuern, Programmieren und Bedienen von Kommunikationseinrichtungen, insbesondere von Kommunikationsendgeräten bzw. Kommunikationssystemen.

Betrachtet man eine typische Infrastruktur eines Privathauses, so sind dort in der Regel sowohl Kommunikationsendgeräte, zumeist in Form von Festnetz- und/oder Mobilfunktelefonen als auch eine Reihe von Unterhaltungsendgeräten, d.h. Geräten der Unterhaltungselektronik, Audioendgeräten oder Videoendgeräten, beispielsweise Fernsehgeräten, zu finden.

Die Großzahl der Benutzer ist mit der Bedienung der Unterhaltungsgeräte gut vertraut, da diese schon vor längerer Zeit in den Wohnungen der Anwender Einzug gehalten haben. Insbesondere sind beispielsweise moderne Fernsehgeräte besonders einfach über Menüführungen zu bedienen und zu programmieren, wozu komfortabler Weise in der Regel auch noch eine Fernbedienung verwendet werden kann.

Auf der anderen Seite verfügen moderne Telekommunikationsendgeräte bzw. -systeme häufig über viele grundsätzlich für einen Benutzer vorteilhafte Funktionen, wie beispielsweise ein internes Telefonbuch mit Personennamen zugeordneten Telefonnummern, Rufnummernanzeige, sowie über Funktionalitäten, wie Anrufumleitung, Makeln, Gespräche halten, etc.

Allerdings erweist sich die Bedienung und Programmierung solcher Telekommunikationsgeräte für viele Benutzer als zu kompliziert, sodass diese Vorteile nur selten ausgenutzt werden. Dies ist zumeist auf eine komplizierte Menüführung bei den Telekommunikationsgeräten, insbesondere aber auf die kleinen Anzeigen sowie die kleinen Displays mit nur geringer Anzeigemöglichkeit zurück zu führen.

Aus der US-Patentschrift US-A-5,410,326 (Goldstein, Steven, W) 25. April 1995 ist eine universelle Fernbedienung bekannt, mit der mehrere unterschiedliche Geräte der Unterhaltungselektronik bedient werden können. Die Fernbedienung umfasst dafür ein Display, mit Hilfe dessen verschiedene grafische Bedienelemente (Icons) angezeigt und zugegriffen werden können. Die Fernbedienung ist - neben ihrer Eigenschaft als Infrarot-Fernbedienung - durch eine bidirektionale Funkschnittstelle mit einer Zentraleinheit (Set-Top-Box) verbunden. Diese Set-Top-Box ist mit einem Telefon verbunden, so dass zum Beispiel Warenbestellungen getätigt werden können oder gebührenpflichtige Fernsehsendungen abboniert werden können ("Payper-View").

Ferner ist aus der US-Patentschrift US-A-5,805,677 (Ferry et al) B. September 1998 eine Anordnung bekannt, mit deren Hilfe eingehende Fernsprechverbindungen in einem Haushalt auf den Bildschirmen des Fernsehgerätes dargestellt werden können. Dazu ist zwischen einer herkömmlichen Videosignalquelle (z. B. Videorekorder oder Satellitenempfänger) eine Box geschaltet, die mit der Fernsprechleitung verbunden ist. Bei eingehenden Fernsprechverbindungen, insbesondere bei solchen mit einer Anruferidentifizierung, wird mit Hilfe der zwischengeschalteten Box eine Textinformation erzeugt, die mit Hilfe eines analogen Signalmischers in das Videosignal der Videoquelle eingemischt wird und somit in dem laufenden Fernsehprogramm dargestellt wird.

Für heutige Kommunikationssysteme, wie beispielsweise auch Nebenstellenanlagen, bestehen folgende Administrationsmöglichkeiten:
- über ein angeschlossenes Telefon;
- über ein spezielles PC-Tool, wobei die Administration lokal oder remote erfolgen kann;
- über einen Web-Browser, ebenfalls lokal oder remote;
- über eine Terminalverbindung, beispielsweise Telnet;
- über eine Netzwerk-Management-Umgebung.

Allerdings stellen alle diese Möglichkeiten für den "normalen", durchschnittlichen Heim-Anwender keine wirkliche Erleichterung, oftmals sogar eine Verkomplizierung der Bedienung der Kommunikationssysteme, dar, da es sich bei den angeführten Möglichkeiten um keine für einen durchschnittlichen Benutzer bekannten Bedienungsoberflächen handelt.

Es ist eine Aufgabe der Erfindung, die Benutzung von Telekommunikationseinrichtungen wesentlich zu vereinfachen und insbesondere die Hemmschwelle vieler Benutzer gegenüber der Nutzung komplizierter Funktionalitäten solcher Einrichtungen zu verringern.

Diese Aufgabe wird mit einem eingangs erwähnten System dadurch gelöst, dass erfindungsgemäß die Kommunikationseinrichtung dazu eingerichtet ist, zumindest bei Aktivierung eines Administrationsmodus ein aktives, mit der Kommunikationseinrichtung verbundenes Unterhaltungsendgerät automatisch zu suchen und zur Administration ein Auswahlmenü auf einer Anzeige des Unterhaltungsendgerätes anzuzeigen.

Mit der Erfindung wird die strikte, heute vorliegende Trennung von Geräten der Unterhaltungselektronik und von Kommunikationsgeräten aufgehoben und es wird eine übergreifend Nutzung von Funktionen ermöglicht.

Besonders vorteilhaft lässt sich die Steuerung, Programmierung, Bedienung etc. der Kommunikationsgeräte bzw.- systeme gestalten, wenn das Unterhaltungsendgerät zumindest eine Anzeige aufweist und zusätzlich unter Umständen noch zumindest eine Eingabe aufweist. Die Eingabe kann dabei eine an dem Unterhaltungsendgerät angebrachte Tastatur aber auch eine Fernbedienung, wie sie bei modernen Unterhaltungsgeräten üblich und bekannt ist, sein.

Zweckmäßig ist es, wenn das Unterhaltungsendgerät in an sich bekannter Weise ein Fernsehgerät ist. Nahezu in jedem Haushalt befindet sich ein solches Fernsehgerät, dessen Bedienung auch den meisten Benutzern geläufig ist, wodurch sich unter Verwendung eines Fernsehgerätes die Bedienung und Steuerung besonderes einfach gestalten lässt. Insbesondere wird dabei die Bedienung auch durch den großen Bildschirm des Fernsehgerätes erleichtert.

Bei der Schnittstelle zur Anbindung eines Telekommunikationsgerätes oder -systemes an das Unterhaltungsendgerät handelt es sich üblicherweise um eine Drahtschnittstelle. Besonders günstig ist es aus verständlichen Gründen allerdings, wenn die Schnittstelle eine kabellose Schnittstelle ist.

Beispielsweise ist die Schnittstelle eine Funkschnittstelle, etwa basierend auf dem bekannten "Bluetooth"-Standard.

Für eine rasche Übertragung hoher Datenmengen ist es günstig, wenn die Schnittstelle eine Hochgeschwindigkeitschnittstelle ist. Beispielsweise kann die drahtlose Übertragung über eine Schnittstelle basierend auf dem geplanten, sogenannten Hyper-LAN2-Standard erfolgen. Besondere Merkmale dieses Standards sind eine hohe Bandbreite (>50 Mbit/s), die Möglichkeit einer direkten Punkt-zu-Punkt-Übertragung zwischen 2 Endgeräten, und eine Bandbreitenreservierung.

Bei einer konkreten Ausführungsform der Erfindung basiert die Schnittstellenübertragung auf dem Firewire-Standard.

Eine erprobte Ausführungsform der Erfindung zeichnet sich dadurch aus, dass das Kommunikationsendgerät bzw. Kommunikationssystem dazu eingerichtet ist, bei Aktivierung eines Administrationsmodus ein aktives, mit dem Gerät/System verbundenes Unterhaltungsendgerät zu suchen. Wird beispielsweise auf einem Telefongerät durch Drücken der entsprechenden Tasten die Option zur Administration, d.h. zur Programmierung oder Verwaltung der Funktionen, Einstellungen, Daten etc. auf dem Telefon angewählt, so sucht dieses ein aktives, angeschlossenes Unterhaltungsgerät, beispielsweise einen Fernseher, mit dessen Hilfe die Administration des Telefons erfolgt.

Besonders vorteilhaft ist es für einen Benutzer, wenn zur Administration ein "On-Screen-Menü", d.h eine Menüstruktur auf der Anzeige des Unterhaltungsendgerätes angezeigt wird. Beispielsweise bieten TV-Geräte und deren Fernbedienungen zur Bedienung dieser Funktionen bereits entsprechende Tasten zur Auswahl von Menüpunkten an und sind dem Benutzer dadurch bereits eher vertraut als eine für ihn komplett neue Oberfläche eines Kommunikationssystems, wodurch die Scheu der Benutzer vor der Benutzung der komplizierteren Funktionen der Kommunikationsgeräte stark abgebaut werden kann.

Bei einer konkreten Ausführungsform der Erfindung ist das Kommunikationsendgerät bzw. Kommunikationssystem dazu eingerichtet, bei einem eingehenden Anruf ein aktives, mit dem Gerät/System verbundenes Unterhaltungsendgerät zu suchen und mit diesem Verbindung aufzunehmen und die relevanten Informationen zu übermitteln.

Beispielsweise kann das Kommunikationsendgerät/Kommunikationssystem dazu eingerichtet sein, zustandsabhängige Informationen an ein aktives Unterhaltungsendgerät zu übertragen. Günstig kann es in diesem Zusammenhang im Sinne einer einfachen Benutzung sein, wenn etwa bei einem eingehenden Anruf die Rufnummer des rufenden Anschlusses eingeblendet wird.

Des weiteren kann es zweckmäßig sein, wenn der Vorrichtung zumindest eine Datenbank für den zustandsabhängigen Informationen entsprechende Einblendesymbole zugeordnet ist, welche entsprechend den an das Unterhaltungsendgerät übertragenen Informationen auf diesem einblendbar sind.

Bei einer erprobten Ausführungsform ist die zumindest eine Datenbank der Kommunikationseinrichtung zugeordnet.

Falls die Datenbank eine Foto- und/oder Symboldatenbank und/oder eine Namensdatenbank ist, kann beispielsweise ein Foto des Anrufers und/oder ein dem Anrufer zugeordnetes Symbol und/oder der Name des Anrufers auf dem Unterhaltungsgerät eingeblendet werden, was naturgemäß die Erkennung des Anrufers wesentlich erleichtert.

Üblicherweise ist dabei die zumindest eine Datenbank auf zumindest einer Speichereinrichtung abgespeichert, welche der Vorrichtung zugeordnet ist, wobei es besonders zweckmäßig ist, wenn die zumindest eine Speichereinrichtung eine Speichereinrichtung eines an das Unterhaltungsendgerät angeschlossenen Kommunikationsendgerätes bzw. -systems ist.

Im folgenden ist die Erfindung an Hand der Zeichnung näher erläutert.

In dieser zeigen:
- Fig. 1: eine schematische Darstellung eines ersten beispielhaften erfindungsgemäßen Systems;
- Fig. 2: eine weitere schematische Darstellung eines beispielhaften erfindungsgemäßen Systems;
- Fig. 3: einen beispielhaften Signalisierungsablauf bei einem an einem Telekommunikationssystem bzw. -endgerät ankommenden Anruf; und
- Fig. 4: einen beispielhaften Signalisierungsablauf bei der Administration eines Kommunikationsendgerätes nach der Erfindung.

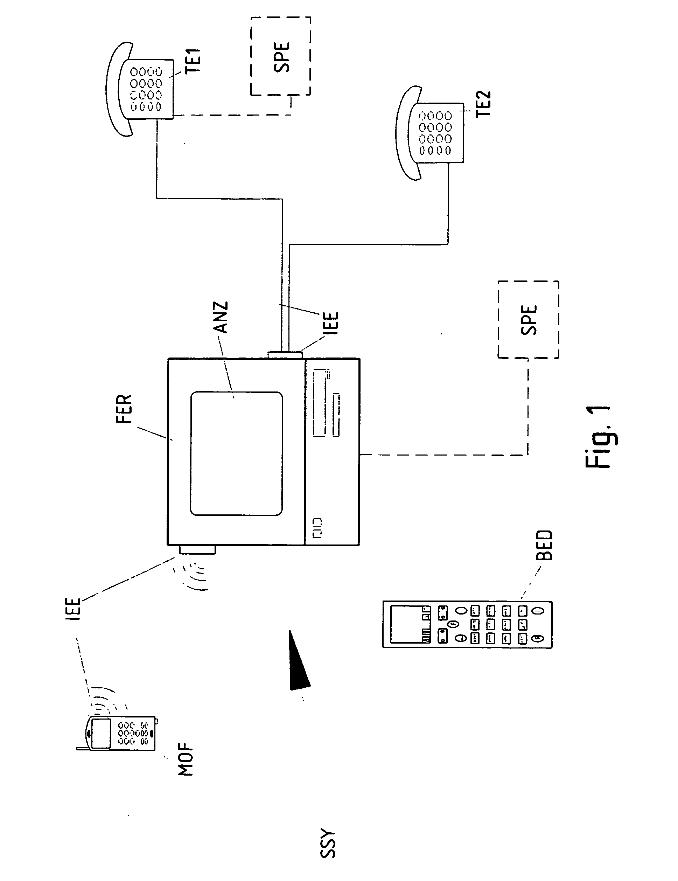

Ziel der Erfindung ist die Nutzung von Unterhaltungsendgeräten, vorzugsweise mit Bildschirm, beispielsweise eines üblichen Fernsehgerätes FER, wie in der Fig. 1 gezeigt, zur Steuerung, Programmierung, Bedienung etc. von Kommunikationseinrichtungen, insbesondere von Telekommunikationsendgeräten und -systemen. Hintergrund der Erfindung ist der Gedanke, dass bei vielen Privatkunden eine hohe Hemmschwelle gegenüber der Nutzung kompliziert zu bedienender technischer Geräte, wie Telekommunikationsgeräten TE1, TE2, MOF, TE1' - TE3' oder Telekommunikationssystemen SYS - etwa einer Telekommunikationsanlage ANL mit angeschlossenen Telefonen TE1' - TE3' und Mobilfunkgeräten MOF' - besteht. Aufgrund der Komplexität der Bedienung werden daher für die Zwecke der Telekommunikation oftmals gezielt nur einfache Telefone benutzt oder viele der möglichen Funktionen werden kaum oder gar nicht genutzt. Was jedoch in nahezu jedem Haushalt vorhanden ist und seit langer Zeit als technisches Gerät akzeptiert wird, ist eben beispielsweise ein Fernsehgerät.

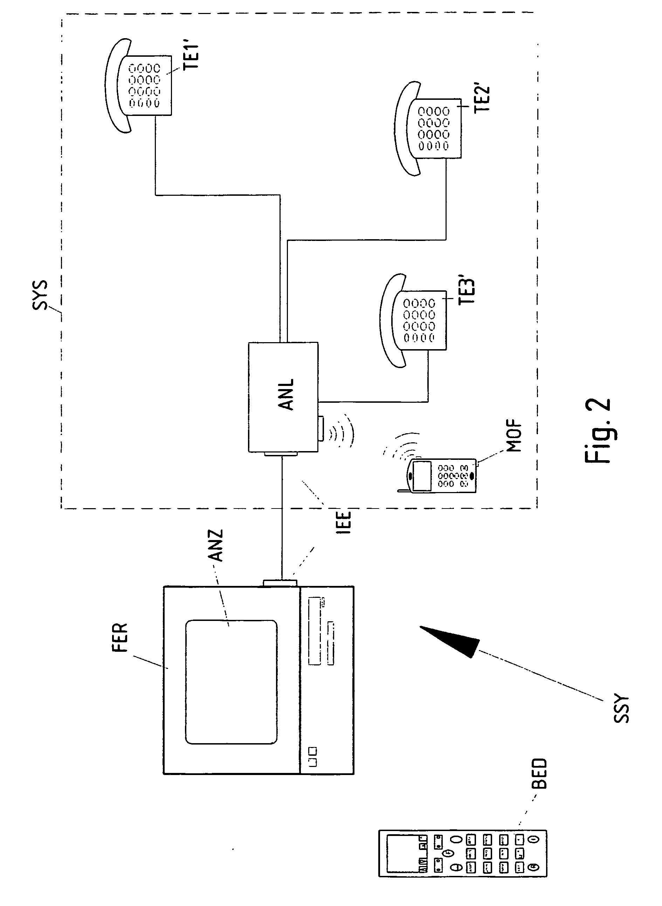

Damit eine Bedienung, Programmierung und Steuerung von komplizierten Kommunikationssystemen und -geräten für Benutzer vereinfacht werden kann, werden nun gemäß der Erfindung ein oder mehrere solcher Kommunikationsgeräte TE1, TE2, SYS oder Telekommunikationssysteme SYS, beispielsweise eine Telekommunikationsanlage SYS mit mehreren angeschlossenen Endgeräten TE1' - TE3', wie in den Figuren 1 und 2 gezeigt, über entsprechende Schnittstellen IEE mit dem Unterhaltungsgerät FER zu einem erfindungsgemäßen System SSY verbunden, wie dies in den Figuren 1 und 2 dargestellt ist. Die Telekommunikationsendgeräte bzw. -systeme sind ihrerseits mit in der Zeichnung nicht dargestellten Kommunikationsnetzen verbindbar.

In diesem Zusammenhang sei vorab erwähnt, dass die Kommunikationsgeräte nicht unmittelbar an das Unterhaltungsgerät FER angebunden sein müssen, sondern dass auch eine Anbindung der Kommunikationsgeräte an eine andere mit dem Unterhaltungsendgerät verbundene Kommunikationseinrichtung durchaus möglich ist, wenn sich dies als zweckmäßig erweist.

Besonders vereinfacht wird die Bedienung etc. der angeschlossenen Kommunikationsendgeräte, wenn das Unterhaltungsendgerät über eine Anzeige ANZ, wie einen Bildschirm bei einem Fernsehgerät, sowie zusätzlich noch über eine Eingabe, beispielsweise in Form einer Fernbedienung FER, verfügt.

Als Übertragungsschnittstelle IEE für Daten und Steuerung wird vor allem eine Schnittstelle basierend auf dem sogenannten FireWire-Standard (auch unter IEEE1394 "Institute of Electrical and Electronics Engineers" bekannt) verwendet. Dabei handelt es sich um einen seriellen Hochleistungsbus, mit dem Vorrichtungen mit einem Computer oder einem anderen Steuer- oder Bediengerät, wie eben im Rahmen der Erfindung mit einem Unterhaltungsendgerät, verbunden werden können. FireWire bietet eine einfache "Stecker-und-Steckdosen"-Verbindung, wobei eine Abbindung von bis zu 63 Geräte mit Datentransferraten von bis zu 400 Mbit/s (Megabit pro Sekunde) möglich ist. Der FireWire-Standard beschreibt einen seriellen Bus oder eine Verbindung zwischen einem oder mehreren peripheren Geräten und dem Mikroprozessor des Computers oder Steuergerätes. Aufgrund der hohen Datenübertragungsraten eignet sich diese Schnittstelle für Multimedia-Anwendungen. Außerdem bietet FireWire die Möglichkeit des sogenannten "hot-plug" und "plug and play", sodass etwa bei einem Anbinden eines weiteren Gerätes der Computer bzw. das Bedienungsgerät nicht heruntergefahren und neu gestartet werden muss, sodass eine beliebige Vorrichtung während des Betriebes an den Computer etc. angeschlossen werden kann.

FireWire (IEEE 1394) bietet zwei Typen von Datentransfer, nämlich asynchronen und isochronen. Der asynchrone Datentransfer wird für traditionelle Lade-und-Speicher-Anwendungen verwendet, wo der Datentransfer initiiert und eine Anwendung unterbrochen wird, wenn eine vorgegebene Länge von Daten in einem Buffer empfangen wurden.

Isochroner Datentransfer gewährleistet, dass der Datenfluss mit einer vorher festgelegten Rate stattfindet, sodass eine Anwendung den Datenfluss auf eine zeitlich genau festgelegte Weise handhaben kann. Auf diese Weise wird für Multimedia-Anwendungen die Notwendigkeit eines Zwischenspeicherns reduziert und es wird für eine kontinuierliche Darstellung für den Betrachter gesorgt.

Bei der Schnittstelle IEE kann es sich auch um ein schnurlose Schnittstelle, etwa eine Funkschnittstelle, handeln. Voraussichtlich wird dabei FireWire auch auf Basis des zukünftigen europäischen Standards HiperLAN2 zum Einsatz kommen. Besondere Merkmale dieses Standards sind wiederum eine hohe Bandbreite (>50 Mbit/s), die Möglichkeit einer direkten Punkt-zu-Punkt-Übertragung zwischen zwei Endgeräten und eine Bandbreitenreservierung.

Ausgehend von einem Standard, wie er beispielsweise von der Initiative HAVI ("Home Audio Video Interoperability") geschaffen wurde, der die Zusammenarbeit verschiedener Unterhaltungsendgeräte vereinfachen soll, wird es nun möglich, dass über einen Bus wie beispielsweise Firewire oder WirelessFireWire verbundene Geräte untereinander kommunizieren, sich gegenseitig steuern und Ressourcen eines anderen Gerätes nutzen können. Die vorliegende Erfindung nutzt diese Möglichkeit zur Darstellung (tele)kommunikationsspezifischer Informationen auf einem Bildschirm eines Unterhaltungsendgerätes, vorzugsweise eines Fernsehgerätes. Allgemein wird es durch die Erfindung möglich, bei laufendem Fernseher zustandsabhängige Einblendungen auf dem Bildschirm vorzunehmen. Beispielsweise kann ein kommender Anruf in einem in das laufende Fernsehbild eingeblendeten Fenster dargestellt werden. Als Zusatzinformationen können dabei z.B. Name und Rufnummer des Anrufers eingeblendet werden oder ein Foto des Anrufers wird eingeblendet.

Die entsprechenden Informationen, eben wie oben angesprochen ein Name oder Foto eines Anrufers, die einer bestimmten Rufnummer zugeordnet sind, sind in einer Datenbank abgelegt, welche der erfindungsgemäßen Vorrichtung zugeordnet ist. Die Datenbank ist dabei in einer Speichereinrichtung SPE abgespeichert, welche der Vorrichtung zugeordnet ist. Hinsichtlich der Zuordnung der Speichereinrichtung besteht dabei die Möglichkeit, dass diese unmittelbar an das Unterhaltungsendgerät FER angebunden ist. Diese kann aber auch an eine Kommunikationseinrichtung TEL, SYS angebundenen sein, oder die Speichereinrichtung kann auch in eine Kommunikationseinrichtung TEL, SYS integriert sein. Natürlich ist es auch möglich, dass mehrere Datenbanken, welche auf verschiedenen Speichereinrichtungen SPE, beispielsweise auf mehrere an das Unterhaltungsendgerät FER angebundenen Kommunikationseinrichtungen TEL, SYS abgespeichert sind, zur Verfügung stehen, wobei dann alle an das Unterhaltungsendgerät FER angeschlossenen Einrichtungen TEL, SYS diese Datenbanken wechselseitig nutzen können, was auch die vorteilhaftestes Ausführungsform der Erfindung darstellt.

Voraussetzung für das Funktionieren der Erfindung ist eine entsprechende Schnittstelle in einem Telekommunikationsendgerät TE1, TE2, MOF oder dem Telekommunikationssystem SYS, welches in diesem Umfeld eher als Kommunikationsserver agiert. Der Definition des FireWire-Standards entsprechend werden natürlich auch Datenendgeräte mit hoher Bandbreite unterstützt. Auf Basis dieser physikalischen Schnittstelle müssen auf der Kommunikationsseite nun auch die notwendigen Protokolle der höheren Schichten implementiert werden, die dann eine entsprechende Kommunikation mit TV-Geräten erlauben, etwa basierend auf dem oben bereits angesprochenen Havi-Standard ("HAVI-Specification 1.1" vom 15. Mai 2001, beispielsweise unter http://www.havi.org ).

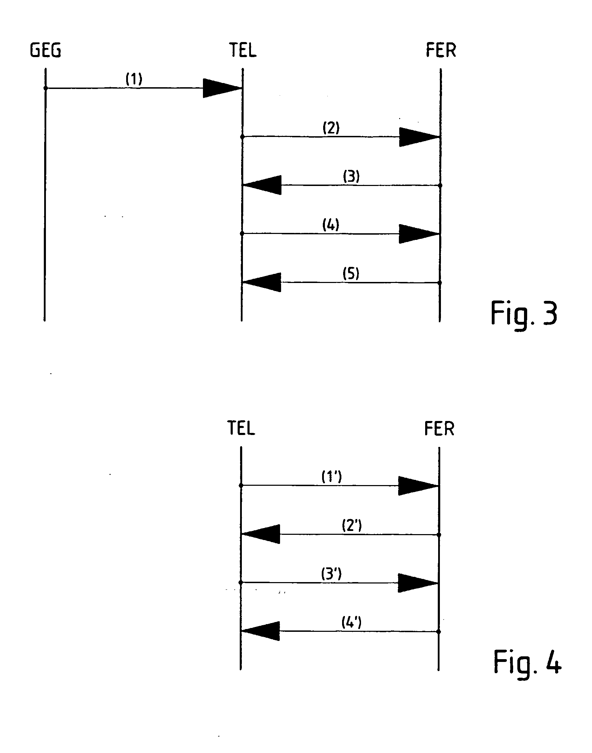

Im folgenden soll an Hand eines bei einem an ein Unterhaltungsendgerät FER angeschlossenen Kommunikationsgerätes TEL einlangenden Anrufes der Signalisierungsablauf gemäß Fig. 3 erläutert werden:
- Ein von einer-Gegenstelle GEG kommender Anruf (1) wird in dem Kommunikationsendgerät, beispielsweise einem Telefon TEL, zumeist in Verbindung mit einer Rufnummerninformation des Anrufers signalisiert.
- Nach Eintreffen der Anruferinformation wird über die Schnittstelle IEE nach einem aktiven Fernsehgerät FER gesucht (2).
- Wird ein solches Fernsehgerät FER gefunden, das sich dann entsprechend bei dem Telefon TEL meldet (3), wird von dem Telefon TEL eine Aufforderung für die Einblendung eines Meldungs- bzw. Informationsfensters an dieses Gerät FER gesendet, und es werden als Inhalt für dieses Fenster dem Anrufer zugeordnete Informationen an das TV-Gerät FER gesendet (4). Beispielsweise können in dem Telefon der Rufnummer Informationen wie Name etc. des Anrufers zugeordnet sein, die dann in Verbindung mit oder anstelle der Rufnummer angezeigt werden. Mit der Ausgabemöglichkeit auf einem grafischen Display oder Bildschirm bietet sich zudem an, im Kommunikationsgerät TEL eine Foto- oder Symboldatenbank, die beispielsweise auf einem Speicher des Telefons abgelegt ist, abzulegen und entsprechende Informationen auf dem Bildschirm anzuzeigen. Auf dem Bildschirm wird nun ein Fenster dargestellt, in dem die übertragenen Informationen dargestellt werden. Der TV-Zuschauer hat somit die Möglichkeit, mit einem Blick zu erkennen, wer gerade anruft.
- Als Erweiterung der reinen Anzeigefunktionalität ist es auch möglich, in umgekehrter Richtung eine Steuerung zu ermöglichen. Auf dem Bildschirm des Fernsehgerätes FER werden (einfache) Auswahlmöglichkeiten angeboten, wie mit dem Anruf verfahren werden soll, beispielsweise "Anruf zu Anrufbeantworter weiterleiten", "Telefon auf Freisprechen schalten", "Stummschalten", "Informationen ausblenden", etc. Die angebotenen Funktionen, die auch als Symbole dargestellt werden können, können nun einfach beispielsweise per Fernbedienung BED des Fernsehers FER ausgewählt und aktiviert werden. Dabei werden entsprechend der ausgewählten und aktivierten Optionen entsprechende Steuersignale an das Kommunikationsgerät übertragen (5), welches dann die entsprechende(n) Aktion(en) ausführt.

Gemäß der Erfindung sind die Informationen, die auf dem Fernsehgerät eingeblendet werden, in einer oder mehreren Datenbanken abgelegt, welche der erfindungsgemäßen Vorrichtung zugeordnet sind. Die Datenbank(en) sind dabei auf einer oder verteilt auf mehreren Speichereinrichtungen SPE abgespeichert, die entweder an das Unterhaltungsendgerät und/oder die Kommunikationsgeräte/systeme angebunden sind. Beispielsweise kann eine Foto- oder Symboldatenbank vorhanden sein, die einem Gerät, etwa dem Unterhaltungsendgerät, zugeordnet ist, während ein oder mehrere Telefonbücher in einem oder mehreren Telefongeräten abgelegt sind. Hinsichtlich der Zuordnung von Rufnummern und/oder Namen zu entsprechenden Fotos kann es aber von Vorteil hinsichtlich einer einfacheren Verknüpfung sein, diese Daten in einer einzigen Datenbank abzulegen, wenngleich auch eine Verknüpfung von in unterschiedlichen Datenbanken abgelegten Informationen keine große Problematik darstellen sollte.

Bevorzugt ist allerdings eine Ausführungsvariante der Erfindung, bei welcher die auf dem Fernsehgerät FER erzeugten Inhalte direkt aus einem Kommunikationsgerät TEL bzw. aus einem Kommunikationssystem SYS stammen, beispielsweise indem auf eine interne Datenbank zurück gegriffen wird. Die Übertragung dieser Informationen erfolgt dann über die entsprechenden Schnittstellen IEE, wobei die Art der Übertragung über die entsprechenden Standards festgelegt ist, und das Unterhaltungsendgerät, insbesondere das Fernsehgerät FER dient in diesem Fall lediglich als Anzeige- bzw. Bedienterminal.

In gleicher Art und Weise können auch Telefonbücher, die etwa in der internen Datenbank eines angeschlossenen Kommunikationsendgerätes TEL abgelegt sind, zum Aufbau eines Anrufes auf dem Bildschirm ANZ des Fernsehgeräts FER dargestellt werden. Die Telefonnummer oder zugeordnete Symbole aus einer Symbolbibliothek werden dann auf dem Bildschirm ANZ angezeigt und können von dem Benutzer angewählt und angerufen werden.

Abschließend ist in Fig. 4 ein Signalisierungsverlauf bei der Administration eines Kommunikationsendgerätes TEL in einem erfindungsgemäßen System SYS dargestellt:
- Aktiviert ein Benutzer des Kommunikationsendgerätes TEL die Funktion "Administration", so sucht das Kommunikationsendgerät TEL zunächst ein passendes Ausgabemedium, d.h. ein aktives Fernsehgerät FER (1').
- Wird ein solches Fernsehgerät FER gefunden, wird an dieses nach einer Rückmeldung (2') eine Aufforderung für die Einblendung eines On-Screen-Menüs gesendet (3'). Als Inhalt für dieses Fenster (On-Screen-Menü) werden die einzelnen Menüinhalte und Auswahlpunkte an das Fernsehgerät FER gesendet. Auf dem Bildschirm ANZ des Fernsehgeräts FER wird nun ein Fenster dargestellt, in dem die übertragenen Informationen dargestellt werden. Der Benutzer hat nun die Möglichkeit, innerhalb der angebotenen Punkte zu navigieren, sich Hilfetexte anzeigen zu lassen und einzelne Punkte zu aktivieren. Auch eine Eingabe von Texten lässt sich z.B. durch Einblenden einer virtuellen Tastatur erreichen.
- Nach erfolgter Auswahl erfolgt eine Übertragung der Auswahlinformation vom Fernsehgerät FER zum Kommunikationsendgerät TEL (4'), wo die entsprechenden Parameter verändert werden.

Mit der Erfindung entsteht ein "Zusammenwachsen" der Telekommunikationswelt mit der Entertainment-Welt, wodurch vorteilhafterweise viele grundsätzlich kommunikationsfremde Standards für die Telekommunikationswelt im Sinne einer einfachen Benutzung für den Anwender verwendet werden können. In einer typischen heutigen und zukünftigen Heim-Umgebung findet sich neben Komponenten der Unterhaltungselektronik (Hifi, TV, Video, ....) auch Kommunikationsendgeräte (Telefon/-e / Telefonanlage, künftig auch sogenannte "Kommunikationsserver", mit denen verschiedenste Kommunikationsarten, wie Telefonie, SMS, Chat, etc. durchgeführt werden können). Mit Hilfe dieser Erfindung kann ein Benutzer eine für ihn gewohnte Benutzungsoberfläche für neue Anwendungszwecke nutzen. Die Bedienung eines modernen Fernsehgerätes, die inzwischen per Bildschirmmenüführung auch für ungeübte Benutzer leicht durchführbar ist, kann nun zusätzlich für die Bedienung und Programmierung eigentlich artfremder Geräte wie Kommunikationssysteme/Telefonanlagen genutzt werden. Der Benutzer bedient die Telefonanlage nun quasi wie seinen modernen Fernseher oder Videorecorder.

## Patentansprüche

1. System zum Schalten, Steuern, Programmieren und Bedienen zumindest einer Kommunikationseinrichtung,
wobei die zumindest eine Kommunikationseinrichtung (TE1, TE2, MOF, SYS) mit zumindest einem Unterhaltungsendgerät (FER) über zumindest eine Schnittstelle (IEE) verbindbar ist, und
wobei die Kommunikationseinrichtung (TE1, TE2, MOF, SYS) sowie das zumindest eine Unterhaltungsendgerät (FER) dazu eingerichtet sind, über die zumindest eine Schnittstelle (IEE) Signale und/oder Daten auszutauschen,
**dadurch gekennzeichnet,**
**dass** die Kommunikationseinrichtung (TE1, TE2, MOF, SYS) dazu eingerichtet ist, zumindest bei Aktivierung eines Administrationsmodus ein aktives, mit der Kommunikationseinrichtung (TE1, TE2, MOF, SYS) verbundenes Unterhaltungsendgerät (FER) automatisch zu suchen und zur Administration ein Auswahlmenü auf einer Anzeige (ANZ) des Unterhaltungsendgerätes (FER) anzuzeigen.

2. System nach Anspruch 1,
**dadurch gekennzeichnet,**
**dass** das Unterhaltungsendgerät (FER) zumindest eine Eingabe (BED) aufweist.

3. System nach einem der Ansprüche 1 oder 2,
**dadurch gekennzeichnet,**
**dass** das Unterhaltungsendgerät (FER) in an sich bekannter Weise ein Fernsehgerät ist.

4. System nach einem der Ansprüche 1 bis 3,
**dadurch gekennzeichnet,**
**dass** die Schnittstelle (IEE) eine kabellose Schnittstelle ist.

5. System nach Anspruch 4,
**dadurch gekennzeichnet,**
**dass** die Schnittstelle (IEE) eine Funkschnittstelle ist.

6. System nach Anspruch 4 oder 5,
**dadurch gekennzeichnet,**
**dass** die Schnittstelle (IEE) eine Hochgeschwindigkeitsschnittstelle ist.

7. System nach Anspruch 6,
**dadurch gekennzeichnet,**
**dass** die Schnittstellenübertragung auf dem Firewire-Standard basiert.

8. System nach einem der Ansprüche 1 bis 7,
**dadurch gekennzeichnet,**
**dass** die Kommunikationseinrichtung (TE1, TE2, MOF, SYS) dazu eingerichtet ist, bei einem eingehenden Anruf ein aktives, mit dem Gerät/System (TE1, TE2, MOF, SYS) verbundenes Unterhaltungsendgerät (FER) automatisch zu suchen.

9. System nach einem der Ansprüche 1 bis 8,
**dadurch gekennzeichnet,**
**dass** die Kommunikationseinrichtung (TE1, TE2, MOF, SYS) dazu eingerichtet ist, zustandsabhängige Informationen an ein aktives Unterhaltungsendgerät (FER) zu übertragen.

10. System nach Anspruch 9,
**dadurch gekennzeichnet,**
**dass** ihm zumindest eine Datenbank für den zustandsabhängigen Informationen entsprechende Einblendesymbole zugeordnet ist, welche entsprechend den an das Unterhaltungsendgerät (FER) übertragenen Informationen auf diesem einblendbar sind.

11. System nach Anspruch 10,
**dadurch gekennzeichnet,**
**dass** die zumindest eine Datenbank der Kommunikationseinrichtung (TE1, TE2, MOF, SYS) zugeordnet ist.

12. System nach Anspruch 10 oder 11,
**dadurch gekennzeichnet,**
**dass** die Datenbank eine Foto- und/oder Symboldatenbank und/oder eine Namensdatenbank ist.

13. System nach einem der Ansprüche 10 bis 12,
**dadurch gekennzeichnet,**
**dass** die zumindest eine Datenbank auf zumindest einer Speichereinrichtung (SPE) abgespeichert ist, welche dem System (SSY) zugeordnet ist.

14. System nach Anspruch 13,
**dadurch gekennzeichnet,**
**dass** die zumindest eine Speichereinrichtung (SPE) eine Speichereinrichtung einer an das Unterhaltungsendgerätes (PER) angeschlossenen Kommunikationseinrichtung (TE1, TE2, MOF, SYS) ist.

## Claims

1. System for switching, controlling, programming and operating at least one communication device,
where the at least one communication device (TE1, TE2, MOF, SYS) can be connected to at least one entertainment terminal (FER) via at least one interface (IEE), and
where the communication device (TE1, TE2, MOF, SYS) and also the at least one entertainment terminal (FER) are set up to interchange signals and/or data via the at least one interface (IEE),
**characterized**
**in that** the communication device (TE1, TE2, MOF, SYS) is set up to search automatically for an active entertainment terminal (FER) connected to the communication device (TE1, TE2, MOF, SYS) at least upon activation of an administration mode and to display a selection menu on a display (ANZ) on the entertainment terminal (FER) for administration purposes.

2. System according to Claim 1,
**characterized**
**in that** the entertainment terminal (FER) has at least one input facility (BED).

3. System according to one of Claims 1 or 2,
**characterized**
**in that** the entertainment terminal (FER) is a television set in a known manner.

4. System according to one of Claims 1 to 3,
**characterized**
**in that** the interface (IEE) is a wireless interface.

5. System according to Claim 4,
**characterized**
**in that** the interface (IEE) is a radio interface.

6. System according to Claim 4 or 5,
**characterized**
**in that** the interface (IEE) is a high-speed interface.

7. System according to Claim 6,
**characterized**
**in that** the interface transmission is based on the Firewire standard.

8. System according to one of Claims 1 to 7,
**characterized**
**in that** the communication device (TE1, TE2, MOF, SYS) is set up to search automatically for an active entertainment terminal (FER) connected to the unit/system (TE1, TE2, MOF, SYS) upon an incoming call.

9. System according to one of Claims 1 to 8,
**characterized**
**in that** the communication device (TE1, TE2, MOF, SYS) is set up to transmit state-dependent information to an active entertainment terminal (FER).

10. System according to Claim 9,
**characterized**
**in that** it has at least one associated database for insert symbols corresponding to the state-dependent information which are able to be inserted on the entertainment terminal (FER) in line with the information transmitted to said entertainment terminal.

11. System according to Claim 10,
**characterized**
**in that** the at least one database is associated with the communication device (TE1, TE2, MOF, SYS).

12. System according to Claim 10 or 11,
**characterized**
**in that** the database is a photograph and/or symbol database and/or a name database.

13. System according to one of Claims 10 to 12,
**characterized**
**in that** the at least one database is stored on at least one memory device (SPE) which is associated with the system (SSY).

14. System according to Claim 13,
**characterized**
**in that** the at least one memory device (SPE) is a memory device in a communication device (TE1, TE2, MOF, SYS) which is connected to the entertainment terminal (FER).

## Revendications

1. Système de commutation, commande, programmation et exploitation d'au moins un dispositif de communication,
le ou les dispositifs de communication (TE1, TE2, MOF, SYS) pouvant être reliés à au moins un terminal de divertissement (FER) par l'intermédiaire d'au moins une interface (IEE), et
le dispositif de communication (TE1, TE2, MOF, SYS) ainsi que le ou les terminaux de divertissement (FER) étant conçus pour échanger des signaux et/ou des données par l'intermédiaire de la ou des interfaces (IEE),
**caractérisé par le fait que** le dispositif de communication (TE1, TE2, MOF, SYS) est conçu pour chercher automatiquement, au moins lors de l'activation d'un mode de gestion, un terminal de divertissement (FER) actif relié au dispositif de communication (TE1, TE2, MOF, SYS) et pour afficher en vue de la gestion un menu de sélection sur un dispositif d'affichage (ANZ) du terminal de divertissement (FER).

2. Système selon la revendication 1,
**caractérisé par le fait que** le terminal de divertissement (FER) comporte au moins une entrée (BED).

3. Système selon l'une des revendications 1 ou 2,
**caractérisé par le fait que** le terminal de divertissement (FER) est un téléviseur connu en soi.

4. Système selon l'une des revendications 1 à 3,
**caractérisé par le fait que** l'interface (IEE) est une interface sans fil.

5. Système selon la revendication 4,
**caractérisé par le fait que** l'interface (IEE) est une interface radio.

6. Système selon la revendication 4 ou 5,
**caractérisé par le fait que** l'interface (IEE) est une interface à grande vitesse.

7. Système selon la revendication 6,
**caractérisé par le fait que** la transmission via l'interface est basée sur le standard Firewire.

8. Système selon l'une des revendications 1 à 7,
**caractérisé par le fait que** le dispositif de communication (TE1, TE2, MOF, SYS) est conçu pour chercher automatiquement, lors d'un appel entrant, un terminal de divertissement (FER) actif relié à l'appareil / système (TE1, TE2, MOF, SYS).

9. Système selon l'une des revendications 1 à 8,
**caractérisé par le fait que** le dispositif de communication (TE1, TE2, MOF, SYS) est conçu pour transmettre des informations dépendantes de l'état à un terminal de divertissement (FER) actif.

10. Système selon la revendication 9,
**caractérisé par le fait qu'**il lui est associé au moins une base de données pour des symboles à insérer qui correspondent aux informations dépendantes de l'état et qui peuvent être insérés sur le terminal de divertissement (FER) en fonction des informations transmises à celui-ci.

11. Système selon la revendication 10,
**caractérisé par le fait que** la ou les bases de données sont associées au dispositif de communication (TE1, TE2, MOF, SYS).

12. Système selon la revendication 10 ou 11,
**caractérisé par le fait que** la base de données est une base de données de photos et/ou de symboles et/ou une base de données de noms.

13. Système selon l'une des revendications 10 à 12,
**caractérisé par le fait que** la ou les bases de données sont mémorisées sur au moins un dispositif de mémorisation (SPE) qui est associé au système (SSY).

14. Système selon la revendication 13,
**caractérisé par le fait que** le ou les dispositifs de mémorisation (SPE) sont des dispositifs de mémorisation d'un dispositif de communication (TE1, TE2, MOF, SYS) raccordé au terminal de divertissement (FER).
